# EUROPEAN PATENT SPECIFICATION

(11) **EP 3 757 289 B1**
(45) Date of publication and mention of the grant of the patent: **11.08.2021**
(21) Application number: 19000316.0
(22) Date of filing: 28.06.2019
(51) Int. Cl.: E01C 19/48, B60K 37/00, F16C 13/00, F16C 29/00, F16C 29/02, F16C 29/04

(54) **ROAD CONSTRUCTION MACHINE**
STRASSENBAUMASCHINE
MACHINE DE CONSTRUCTION ROUTIÈRE

(43) Date of publication of application: 30.12.2020
(73) Proprietor: BOMAG GmbH, 56154 Boppard (DE)
(72) Inventor: PEDRIALI, Maurizio, 44013 Argenta FE (IT); PARRILLA, Saverio, 48026 Russi RA (IT)
(74) Representative: Heidler, Philipp

(56) References cited:
- EP-A1- 3 150 766
- EP-A2- 2 650 437
- DE-A1- 19 513 551
- DE-U1- 29 915 965

## Description

The invention relates to a road construction machine, in particular to a paver or a material transfer vehicle (MTV) that is used to transfer asphalt material from a transport vehicle, such as a truck, onto a paver.

In prior art, a variety of different road construction machines is known, as road pavers and asphalt paver, respectively, ground milling machines, compactors, or the like which are used for road construction works. Usually, these road construction machines comprise an operator platform for accommodating an operator, who handles or controls the machine and/or monitors the progress of work. Thus, in order to be able to monitor, for example, the road surface on either one of the lateral sides of the road construction machine, usually, the operator platforms known in prior art comprise either two seats, one on each side, or a seat, which may be displaced laterally so that the operator is able to monitor the road surface at the right hand side of the road construction machine or from the left hand side of the latter, as required during work.

However, as the operator either shifts his seat from one position to another one within the operator platform or changes the seat from a seat located on the one side to a seat located on the other side, he or she also needs to be able to control the road construction machine from that side. Therefore, according to prior art, it is known to arrange a first dashboard on one side of the operator platform and another one at the other side of the operator platform, so as to enable an operator to work on either side of the road construction machine.

This solution of providing two separate dashboards in the operator platform, however, is rather expensive, and may also be inconvenient for an operator, who in case of switching from one seat to another, and thus, from one dashboard to another one, possibly needs put the other dashboard into operation or to adjust settings or the like there.

It is furthermore known from EP2650437A2, disclosing a road construction machine, an operator platform, a dashboard, a dashboard holder, a rail guide system comprising upper and lower guide rails with rectangular cross section, a bearing with a roller running on a vertically oriented outer surface of the lower guide rail, to provide a moveable dashboard that is placed on a fixed bearing rail with a thrust bearing that shall transmit forces also in its axial direction. However, thrust bearings have the disadvantage of a comparably high prize, more friction and tend to produce more noise when in use.

Therefore, the present invention is based on the object to provide a road construction machine, which allows an operator to change his or her working position in a lateral and/or an axial direction within the operator cabin, in particular, from one lateral side of the road construction machine to the other lateral side of the machine, without the need of a thrust bearing.

This object is solved according to the present invention by a road construction machine having the features according to claim 1. Preferred embodiments of the invention are specified in the dependent claims.

Accordingly, a road construction machine is provided, comprising:
an operator platform comprising a dashboard, the dashboard being attached to a dashboard holder which is movable horizontally between a first lateral end position and a second lateral end position on a rail guide system, wherein the rail guide system comprises
   - a first upper guide rail having a circular cross section,
   - a second lower guide rail having a rectangular cross section, and
   - at least three bearings,
wherein a first bearing is formed as a slide bearing with a sliding sleeve being guided on the first upper guide rail,
wherein a second bearing is formed as a ball bearing with a first roller running on a vertically oriented outer surface of the second lower guide rail, and
wherein a third bearing is formed as a ball bearing with at least one second roller running on a horizontally oriented outer surface of the second lower guide rail.

The inventive configuration allows an operator who switches his seat or his seat position on the operator platform or within the cabin from one side to another while working to also shift the dashboard laterally (e.g., axially), i.e. parallel to the shifting of his or her working position within the cabin. Thus, only one dashboard is required instead of two dashboards, thereby achieving a less expensive solution.

Further, the inventive construction using the three bearings configured as outlined above also is rather simple and thus, less expensive. The slide bearing moves on the first guide rail having the circular cross section, while in the lower part, namely, at the second lower guide rail, its rotation is blocked by the first and second rollers or track rollers. Preferably, three track rollers are provided, especially two with a vertical axis of rotation and another one with a horizontal axis. By means of this configuration, the geometrical deviation of the second lower guide rail having a rectangular cross section is absorbed. Thus, the arrangement of the bearings on the upper and lower guide rails allows for an easy displacement of the dashboard attached to the dashboard holder which smoothly runs on the guide rails, while the bearings thus arranged primarily absorb forces in radial directions.

According to a preferred embodiment, the second bearing has a horizontal axis of rotation and/or the third bearing has a vertical axis of rotation. Combining at least two bearings with a horizontal axis of rotation and a vertical axis of rotation leads to a reliable blocking of any rotational movement of the dashboard and at the same time present a robust and resilient total construction.

According to still another preferred embodiment, the third bearing comprises two second rollers. This embodiment is even more robust.

Further, it is advantageous, if the second bearing and the third bearing, respectively, comprise a stationary part that is fixed to the dashboard holder by first fixing means and that is stationary with respect to the dashboard holder, and a rotating or rolling part that is movable, especially rotatable, with respect to the dashboard holder. In doing so, the rolling part may be used to roll along the second lower guide rail, which results in very low frictional forces.

The dashboard holder may have a first portion, a second portion and a third portion, which are formed integrally. These portions are advantageously used to fulfill different functions, such as a holding function for the dashboard, a guiding function to bear and guide the dashboard together with the dashboard holder, and a rotational lock function to prohibit rotational movement of the dashboard holder around the longitudinal axis of one of the guide rails.

Moreover, according to another preferred embodiment, the first portion has a front surface and a back surface, wherein the dashboard is attached to the front surface, in particular, by second fixing means. Such fixing means may for example be screws, quick-snap connectors, clamping elements etc. Thus, the fixing means are preferable detachable so that the dashboard may easily be removed if necessary.

Preferably, the second portion has a front surface and a back surface, the front surface of the second portion facing the back surface of the first portion, and wherein the first upper guide rail with the first bearing are supported on the back surface of the second portion.

Also preferably, the third portion has an upper surface and a lower surface, wherein the second lower guide rail with the second bearing and the third bearing are supported on the upper surface of the third portion.

According to yet another preferred embodiment, the first portion and the second portion of the dashboard holder are arranged with respect to each other such that an angle smaller than 90 ° is formed. In doing so it is possible to construct a dashboard holder that requires only a comparably small installation space and at the same time leads to a solid overall structure.

Further, the second portion may be arranged in a substantially vertical direction, and the third portion may be arranged in a substantially horizontal direction such that the second portion and the third portion are arranged with respect to each other substantially perpendicular. This preferred construction of the dashboard holder is advantageous for example for a perpendicular arrangement of the second and third bearing.

Preferably, the dashboard is provided with a plurality of holes for fixing the dashboard adjustably to the holder, wherein the holes are oblong holes with their respective longitudinal axis substantially running parallel to the lateral outer side edges of the dashboard holder. This allows the driver to adjust the position of the dashboard to his own individual needs within a given adjustment range. Thus, the provision of the oblong holes allows for the adjustment of the dashboard, also by simple means, and this, in a cost-efficient manner.

The dashboard may also be adjustable in a direction parallel to the longitudinal axis of the dashboard holder.

Moreover, the dashboard may comprise a plurality of control means for controlling the operation of the road construction machine, and a plurality of display means for displaying internal states of the road construction machine, in particular, machine status indications or operating states of the road construction machine.

It is also advantageous, if the operator platform further comprises at least one operator seat which is movable laterally on the operator platform. Alternatively, the operator platform may also comprise two seats located at either one of the two lateral sides of the operator platform.

According to another preferred embodiment, the road construction machine is configured as a road finisher or asphalt paver, a material transfer vehicle, or a ground compactor, such as a drum roller or a rubber-tired roller. However, the road construction machine may just as well be any other kind of road construction machine, as long as it is equipped with an operator platform or cabin which allows an operator to switch sides from one lateral side of the cabin to the other opposing side of the cabin during work.

The present invention will be described in more detail below with reference to the exemplary embodiments shown in the figures. In the schematic figures:
FIG. 1A is a side view onto a construction machine, in particular an asphalt paver;
FIG. 1B is a perspective view of an operator platform of a road construction machine;
FIG. 2 is a sectional view of the rail guide system for an operator platform of a road construction machine according to an embodiment of the invention;
FIG. 3 is a perspective view of the rail guide system shown in Fig. 2;
FIG. 4 is a detailed view of the guide rail system shown in Fig. 2 with the dashboard holder attached thereto;
FIG. 5 is a perspective view of the rail guide system shown in Fig. 2 with a plurality of dashboard holders attached thereto or with a single dashboard holder in different positions;
FIG. 6 is a perspective view on the front side of the dashboard holder shown in the previous figures; and
FIG. 7 is a perspective view of a dashboard holder supported on the rail guide system shown in the previous figures.

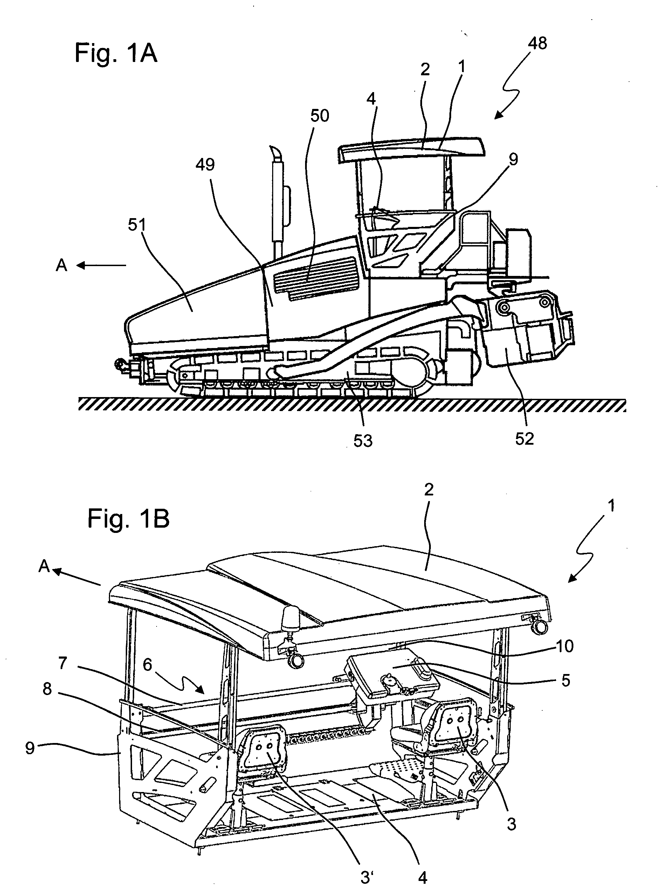

Fig 1A is a side view onto a construction machine that is in the present example in particular an asphalt paver 48 (however, other construction machines are possible and part of the present invention). Core elements of the self-driven asphalt paver are a machine frame 49, a motor 50, a hopper 51, a screed 52, and tracks and/or wheels 53. These generic elements of an asphalt paver 48 are known in the prior art and are not necessarily obligatorily connected with the core idea of the invention as is further explained below.

Fig. 1B shows a perspective view of an operator platform 1 for any kind of road construction machine with a corresponding cabin or platform 1 for an operator to handle the machine and/or monitor the progress of work. The operator platform 1 shown in this embodiment comprises a roof 2 covering the seats 3, 3', the dashboard 5, and the entire floor 4 of the operator platform 1. As can be seen here, there are two seats, namely, a first seat 3 located at the right hand side of the platform 1 and a second seat 3' located at the other opposing lateral side of the platform 1, on its left hand side. Thus, an operator is able to change his or her position according to the current working condition, as needed, so as to either monitor the progress of work on the right hand side of the road construction machine or on the left hand side of the latter.

Here, in the embodiment shown, the two seats 3, 3' are fixedly connected to the bottom 4 of the platform 1. However, according to another embodiment not shown here, there may also be provided only one seat 3, which is arranged displaceably or slidably on the bottom so as to be shifted from a first position on one lateral side of the road construction machine to the other lateral side.

Further, the dashboard 5 is provided, which here is arranged with regard to the working direction A of the machine in front of the first seat 3 and which is movable horizontally so as to also allow for an arrangement of the dashboard 5 in front of the second seat 3'. Namely, the dashboard is movable between a first lateral end position, for example at the right hand side of the operator platform 1, to a second lateral end position of the operator platform 1, for example on the left hand side of the operator platform 1, on a rail guide system 6. The rail guide system 6 comprises a first upper guide rail 7 which has a circular cross section, and a second lower guide rail 8 which has a polygonal, for example rectangular, cross section, as well as three bearings, which will be described in further detail below.

As can be seen in Fig. 1B, the first upper guide rail 7 and the second lower guide rail 8 both directly connected to a frame 9 of the operator platform 1, in particular, at a front side F in working direction of the latter.

The dashboard 5 comprises a number of control means for controlling the operation of the road construction machine, and/or also display means for displaying internal states of the road construction machine, in particular, machine status indications or operating states of the road construction machine. However, these cannot be seen in the figure, since the dashboard is closed by a removeable protective cover 10.

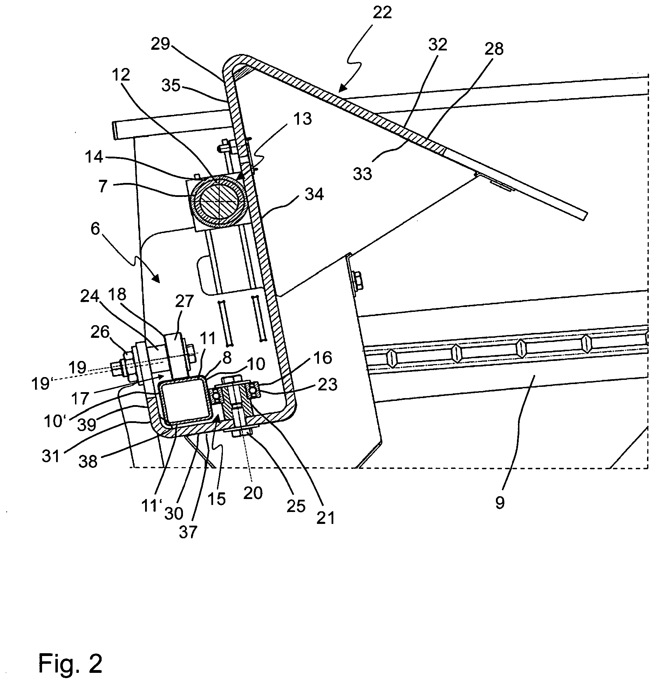

Fig. 2 is a vertical sectional view of the rail guide system 6 for an operator platform 1 of a road construction machine according to an embodiment of the invention, e.g., the embodiment of Fig. 1B, perpendicular to the longitudinal axes of the upper and lower guide rails 7 and 8. As can be seen here, the first upper guide rail 7 has a circular cross section, whereas the second lower guide rail 8 of the rail guide system 6 has a polygonal, especially rectangular, cross section with two opposing vertically oriented outer surfaces 10, 10', namely a right first vertically oriented outer surface 10, and a left second vertically oriented outer surface 10', and two opposing horizontally oriented outer surfaces 11, 11', namely, an upper first horizontally oriented outer surface 11 and a lower second horizontally oriented outer surface 11'. Further, with respect to the first upper guide rail 7, the latter has a circumferential outer surface 12, on which a first bearing is formed as a slide bearing 13 with a sliding sleeve 14 being guided on the circumferential outer surface 12 of the first upper guide rail 7. A second bearing 15 is formed as a ball bearing with a first roller 16 running on the first vertically oriented outer surface 10 of the second lower guide rail 8, and a third bearing 17 is formed as a ball bearing with a second roller 18 running on the first horizontally oriented outer surface 11 of the second lower guide rail 8. Thus, the second bearing 15 has a substantially vertical axis of rotation 20, whereas the third bearing 17 has a substantially horizontal axis of rotation 19. It is noted that the second bearing 15 and/or the third bearing 17 may comprise more than one roller 16/18, for example, it may comprise two rollers 16 and/or 18.

Further, the second bearing 15 comprises a stationary part 21, for example, a shaft 21 on which the first roller 16 is supported, which is fixed to a dashboard holder 22 by fixing means 25, for example, by a screw or bolt. The stationary part 21 is stationary with respect to the dashboard holder 22, whereas a rotatable or rolling part 23 of the second bearing 15 is movable, especially rotatable around axis 20, with respect to the dashboard holder 22. Also, the third bearing 17 comprises a stationary and/or rotable eccentric part 24, for example, a shaft 24 on which the second roller 18 is supported, which also is screwed to the dashboard holder 22 by fixing means 26, for example, by a screw or a bolt with a screw axis 19'. The stationary part 24 may be adjustable and/or may be during use stationary with respect to the dashboard holder 22, whereas a rotatable or rolling part 27 is movable with respect to the dashboard holder 22, especially rotatable around axis 19. It is furthermore noted, that a screw axis 19'may be coaxial or eccentric (as shown in Fig. 2) with regard to the axis 19. The latter allows for improved adjustment properties to tolerances of the whole system.

In the following, the dashboard holder 22 will be described in further detail. The dashboard holder 22 has a first portion 28, a second portion 29, a third portion 30, and a fourth portion 31. The first, second, third, and fourth portions 28, 29, 30, 31 are formed integrally in one piece, but, however, are bent with respect to each other. Namely, the first portion 28 and the second portion 29 of the dashboard holder 22 are arranged with respect to each other such that an angle smaller than 90° is formed there between. Further, the second portion 29 is arranged in a substantially vertical direction, and the third portion 30 is arranged in a substantially horizontal direction such that the second portion 29 and the third portion 30 are arranged with respect to each other substantially perpendicular. Also the third portion 30 and the fourth portion 31 are arranged substantially perpendicular with respect to each other, whereby the fourth portion 31 extends upwards, basically in parallel to the second portion 29.

The first portion 28 has a front surface 32 and a back surface 33, wherein the dashboard (see Fig. 1) is attached to the front surface 32, in particular, by second fixing means (not shown here). Also, the second portion 29 has a front surface 34 and a back surface 35, wherein the front surface 34 of the second portion 29 is directed towards the back surface 33 of the first portion 28.

The first upper guide rail 7 with the first bearing 13 is supported on the back surface 35 of the second portion 29 such that the longitudinal axis of the upper guide rail 7 basically extends horizontally. Further, the third portion 30 has an upper surface 36 and a lower surface 37, wherein the second lower guide rail 8, in particular, its second horizontally oriented outer surface 11' is arranged so as to face the upper surface 36 of the third portion 30. The fourth portion 31 also has a front surface 38 and a back surface 39, whereby the second vertically oriented outer surface 12' of the second lower guide rail 8 faces the front surface 38 of the fourth portion 31.

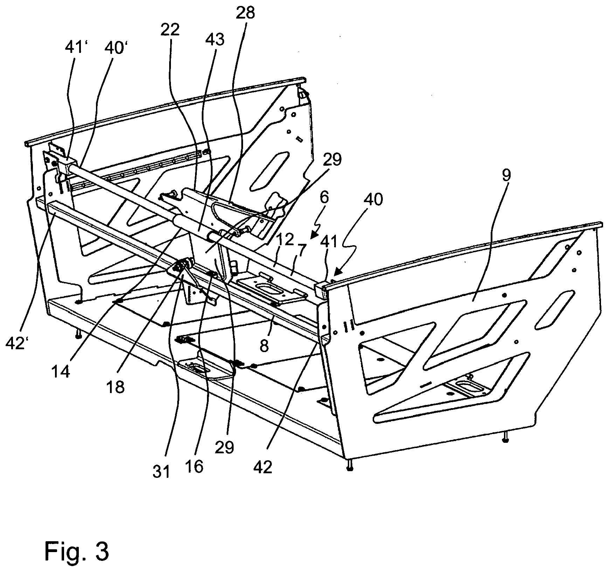

Fig. 3 is a perspective view of the rail guide system 6 shown in Fig. 2. As can be seen here, both the first upper guide rail 7 and the second lower guide rail 8 are fixed to the frame 9 of the operator platform 1 respectively at both ends. Namely, the first upper guide rail 7 is fixed to the frame 9 at a first end 40 and at a second end 40' by means of respective second fixing means 41, 41'. The second lower guide rail 8 is also fixed to the frame 9 at a first end 42 and at a second end 42' by appropriate fixing means. Here, the second lower guide rail 8 is received in respective holes formed in the frame 9 which have a shape corresponding to the outer profile of the second lower guide rail 8. As can be seen here, the holes have a rectangular shape and the respective first and second ends 42, 42' are inserted through the holes respectively.

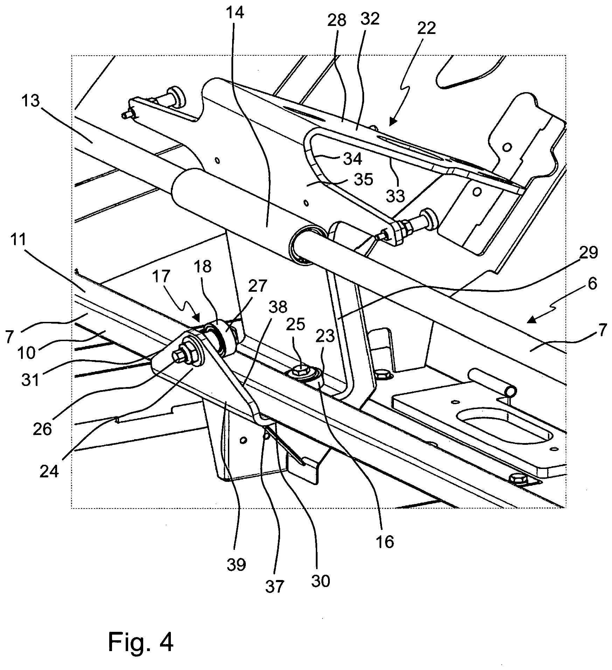

Fig. 4 is a detailed view of the guide rail system 6 with the dashboard holder 22 attached thereto. In particular, the dashboard holder 22 is attached to a portion of the outer surface 43 of the sliding sleeve 14 and further is held by means of the third bearing 17.

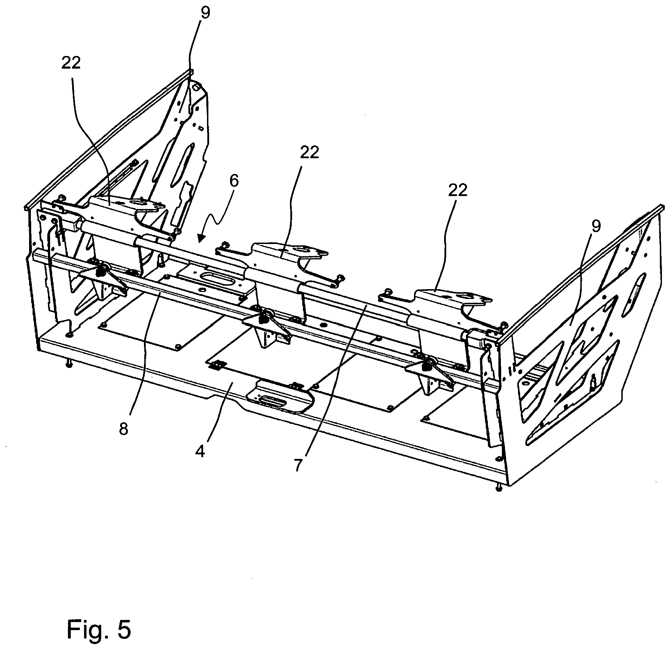

Fig. 5 is a perspective view of the rail guide system 6 with a plurality of, especially identical, dashboard holders 22 attached thereto. Namely, here, there are three basically identical dashboard holders 22 provided on the guide rail system 6 which is configured as outlined above. Alternatively, Fig. 5 may be understood as showing three different possible positions of the same dashboard.

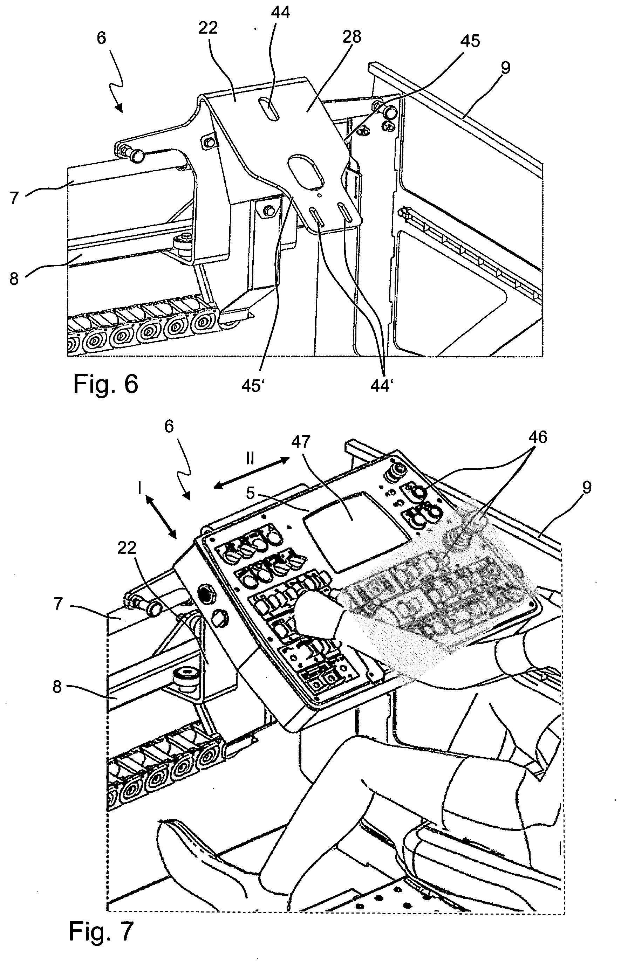

Fig. 6 is a perspective view on the front side of the dashboard holder 22, or rather on the front surface 32 of first portion 28 of the dashboard holder 22. As can be seen here, the dashboard holder 22 is provided with a plurality of holes for fixing the dashboard (not shown here) adjustably to the dashboard holder 22, namely, here, there are three, especially parallel, oblong holes provided, one upper oblong hole 44 running substantially parallel to two lower oblong holes 44' also running substantially parallel to each other. The upper and lower oblong holes 44, 44' all run substantially parallel to the lateral outer side edges 45, 45' of the first portion 28 of the dashboard holder 22. Thus, when fixing the dashboard to the dashboard holder 22 by using the oblong holes 44, 44' and second fixing means which may be inserted into the holes 44, 44', the dashboard is adjustable in a direction I (Fig. 7) parallel to the longitudinal axis of the dashboard holder or in parallel to the lateral outer side edges 45, 45' of the dashboard holder.

Fig. 7 is a perspective view of a dashboard holder 22 supported on the rail guide system 6 according to an embodiment, as described above, with a dashboard 5 fixed thereto, as described with respect to Fig. 6. The dashboard 5 comprises a plurality of control means 46, as buttons or switches for controlling the operation of the road construction machine. Further, the dashboard 5 comprises a display means 47 for displaying, for example, internal states of the road construction machine. As is indicated by the double arrows, the dashboard 5 may be displaced horizontally in a direction II on the rail guide system 6, and also, a slight adjustment substantially in parallel to the lateral side edges 45, 45' of first portion 28 of the dashboard holder 22 in the direction I is enabled.

### Reference numerals

- 1: operator platform
- 2: roof
- 3, 3': seats
- 4: bottom
- 5: dashboard
- 6: rail guide system
- 7: first upper guide rail
- 8: second lower guide rail
- 9: frame
- 10, 10': vertically oriented outer surfaces of second lower guide rail
- 11, 11': horizontally oriented outer surfaces of second lower guide rail
- 12: circumferential outer surface of first upper guide rail
- 13: slide bearing
- 14: sliding sleeve
- 15: second bearing
- 16: first roller
- 17: third bearing
- 18: second roller
- 19: horizontal axis of rotation
- 20: vertical axis of rotation
- 21: stationary part of second bearing
- 22: dashboard holder
- 23: rotable part
- 24: rotable eccentric part of third bearing
- 25: fixing means of second bearing
- 26: fixing means of third bearing
- 27: rotatable part
- 28: first portion of dashboard holder
- 29: second portion of dashboard holder
- 30: third portion of dashboard holder
- 31: fourth portion of dashboard holder
- 32: front surface of first portion
- 33: back surface of first portion
- 34: front surface of second portion
- 35: back surface of second portion
- 36: upper surface of third portion
- 37: lower surface of third portion
- 38: front surface of fourth portion
- 39: back surface of fourth portion
- 40, 40': first and second ends of the first upper guide rail
- 41, 41': fixing means
- 42, 42': first and second ends of the second lower guide rail
- 43: outer surface of sliding sleeve
- 44: upper holes
- 44': lower holes
- 45, 45': lateral outer side edges of first portion of dashboard holder
- 46: control button or switch
- 47: display means
- 48: paver
- 49: machine frame
- 50: motor
- 51: hopper
- 52: screed
- 53: tracks/wheels

- F: front side in working direction

## Claims

1. Road construction machine, in particular asphalt paver (48) or a material transfer vehicle (MTV), comprising:
an operator platform (1) comprising a dashboard, the dashboard (5) being attached to a dashboard holder (22) which is movable horizontally between a first lateral end position and a second lateral end position on a rail guide system (6),
wherein the rail guide system (6) comprises
- a first upper guide rail (7) having a circular cross section,
- a second lower guide rail (8) having a rectangular cross section, and
- at least three bearings (13, 15, 17),
wherein a first bearing (13) is formed as a slide bearing with a sliding sleeve (14) being guided on the first upper guide rail (7),
wherein a second bearing (15) is formed as a ball bearing with a first roller (16) running on a vertically oriented outer surface (10) of the second lower guide rail (8), and
wherein a third bearing (17) is formed as a ball bearing with at least one second roller (18) running on a horizontally oriented outer surface (11) of the second lower guide rail (8).

2. Road construction machine according to claim 1,
wherein the second bearing (15) has a horizontal axis of rotation (19).

3. Road construction machine according to claim 1 or claim 2,
wherein the third bearing (17) has a vertical axis of rotation (20).

4. Road construction machine according to any one of claims 1 to 3,
wherein the third bearing (17) comprises two second rollers (18).

5. Road construction machine according to any one of the preceding claims,
wherein the second bearing (15) and the third bearing (17), respectively, comprise a stationary part (21, 24) that is fixed to the dashboard holder (22) by first fixing means (25, 26) and that is stationary with respect to the dashboard holder (22), and a rotating or rolling part (23, 27) that is movable with respect to the dashboard holder (22).

6. Road construction machine according to any one of the preceding claims,
wherein the dashboard holder (22) has a first portion (28), a second portion (29) and a third portion (30), which are formed integrally.

7. Road construction machine according to claim 6,
wherein the first portion (28) has a front surface (32) and a back surface (33), wherein the dashboard (5) is attached to the front surface (32), in particular, by second fixing means.

8. Road construction machine according to claim 7,
wherein the second portion (29) has a front surface (34) and a back surface (35), the front surface (34) of the second portion (29) facing the back surface (33) of the first portion (28), and wherein the first upper guide rail (7) with the first bearing (13) is supported on the back surface (35) of the second portion (29).

9. Road construction machine according to any one of claims 6 to 8,
wherein the third portion (30) has an upper surface (36) and a lower surface (37), wherein the second lower guide rail (8) with the second bearing (15) and the third bearing (17) is supported on the upper surface (36) of the third portion (30).

10. Road construction machine according to any one of claims 6 to 9,
wherein the first portion (28) and the second portion (29) of the dashboard holder (22) are arranged with respect to each other such that an angle smaller than 90° is formed.

11. Road construction machine according to any one of claims 6 to 10,
wherein the second portion (29) is arranged in a substantially vertical direction, and the third portion (30) is arranged in a substantially horizontal direction such that the second portion (29)and the third portion (30) are arranged with respect to each other substantially perpendicular.

12. Road construction machine according to any one of the preceding claims,
wherein the dashboard holder (22) is provided with a plurality of holes (44, 44') for fixing the dashboard (5) adjustably to the dashboard holder (22), wherein the holes (44, 44') are oblong holes with their respective longitudinal axis substantially running parallel to the lateral outer side edges (45, 45') of the dashboard holder (22).

13. Road construction machine according to claim 12,
wherein the dashboard (5) is adjustable in a direction parallel to the longitudinal axis of the dashboard holder (22), in particular, in parallel to the lateral outer side edges (45, 45').

14. Road construction machine according to any one of the preceding claims,
wherein the dashboard (5) comprises a plurality of control means (46) for controlling the operation of the road construction machine, and display means (47) for displaying internal states of the road construction machine, in particular, machine status indications or operating states of the road construction machine.

15. Road construction machine according to any one of the preceding claims,
wherein the operator platform (1) further comprises at least one operator seat (3, 3') which is movable laterally on the operator platform (1).

16. Road construction machine according to any one of the preceding claims,
wherein the construction machine is configured as a road finisher, a soil compactor or a rubber-tired roller.

## Patentansprüche

1. Straßenbaumaschine, insbesondere Asphaltfertiger (48) oder Materialübergabefahrzeug (MTV), umfassend:
einen Fahrstand (1), der eine Instrumententafel umfasst, wobei die Instrumententafel (5) an einer Instrumententafelhalterung (22) angebracht ist, die auf einem Schienenführungssystem (6) horizontal zwischen einer ersten seitlichen Endposition und einer zweiten seitlichen Endposition bewegbar ist,
wobei das Schienenführungssystem (6) umfasst:
- eine erste obere Führungsschiene (7) mit einem kreisförmigen Querschnitt,
- eine zweite untere Führungsschiene (8) mit einem rechteckigen Querschnitt und
- mindestens drei Lager (13, 15, 17),
wobei ein erstes Lager (13) als Gleitlager mit einer auf der ersten oberen Führungsschiene (7) geführten Gleithülse (14) ausgebildet ist,
wobei ein zweites Lager (15) als Kugellager mit einer ersten Rolle (16) ausgebildet ist, die auf einer vertikal ausgerichteten Außenfläche (10) der zweiten unteren Führungsschiene (8) läuft, und
wobei ein drittes Lager (17) als Kugellager mit mindestens einer zweiten Rolle (18) ausgebildet ist, die auf einer horizontal ausgerichteten Außenfläche (11) der zweiten unteren Führungsschiene (8) läuft.

2. Straßenbaumaschine nach Anspruch 1,
wobei das zweite Lager (15) eine horizontale Drehachse (19) aufweist.

3. Straßenbaumaschine nach Anspruch 1 oder Anspruch 2,
wobei das dritte Lager (17) eine vertikale Drehachse (20) aufweist.

4. Straßenbaumaschine nach einem der Ansprüche 1 bis 3,
wobei das dritte Lager (17) zwei zweite Rollen (18) umfasst.

5. Straßenbaumaschine nach einem der vorhergehenden Ansprüche,
wobei das zweite Lager (15) bzw. das dritte Lager (17) ein ortsfestes Teil (21, 25), das durch erste Befestigungsmittel (25, 26) an der Instrumententafelhalterung (22) befestigt und in Bezug auf die Instrumententafelhalterung (22) ortsfest ist, und ein drehendes oder rollendes Teil (23, 27) umfasst, das in Bezug auf die Instrumententafelhalterung (22) bewegbar ist.

6. Straßenbaumaschine nach einem der vorhergehenden Ansprüche,
wobei die Instrumententafelhalterung (22) einen ersten Abschnitt (28), einen zweiten Abschnitt (29) und einen dritten Abschnitt (30) umfasst, die integral ausgebildet sind.

7. Straßenbaumaschine nach Anspruch 6,
wobei der erste Abschnitt (28) eine Vorderseite (32) und eine Rückseite (33) aufweist, wobei die Instrumententafel (5) an der Vorderseite (32) angebracht ist, insbesondere durch zweite Befestigungsmittel.

8. Straßenbaumaschine nach Anspruch 7,
wobei der zweite Abschnitt (29) eine Vorderseite (34) und eine Rückseite (35) aufweist, wobei die Vorderseite (34) des zweiten Abschnitts (29) der Rückseite (33) des ersten Abschnitts (28) zugewandt ist und wobei die erste obere Führungsschiene (7) mit dem ersten Lager (13) an der Rückseite (35) des zweiten Abschnitts (29) gelagert ist.

9. Straßenbaumaschine nach einem der Ansprüche 6 bis 8,
wobei der dritte Abschnitt (30) eine Oberseite (36) und eine Unterseite (37) aufweist, wobei die zweite untere Führungsschiene (8) mit dem zweiten Lager (15) und dem dritten Lager (17) an der Oberseite (36) des dritten Abschnitts (30) gelagert ist.

10. Straßenbaumaschine nach einem der Ansprüche 6 bis 9,
wobei der erste Abschnitt (28) und der zweite Abschnitt (29) der Instrumententafelhalterung (22) derart zueinander angeordnet sind, dass ein Winkel kleiner als 90° gebildet wird.

11. Straßenbaumaschine nach einem der Ansprüche 6 bis 10,
wobei der zweite Abschnitt (29) in im Wesentlichen vertikaler Richtung angeordnet ist und der dritte Abschnitt (30) in im Wesentlichen horizontaler Richtung angeordnet ist, so dass der zweite Abschnitt (29) und der dritte Abschnitt (30) im Wesentlichen senkrecht zueinander angeordnet sind.

12. Straßenbaumaschine nach einem der vorhergehenden Ansprüche,
wobei die Instrumententafelhalterung (22) mit einer Vielzahl von Löchern (44, 44') zum verstellbaren Befestigen der Instrumententafel (5) an der Instrumententafelhalterung (22) versehen ist, wobei es sich bei den Löchern (44, 44') um Langlöcher handelt, deren jeweilige Längsachse im Wesentlichen parallel zu den seitlichen äußeren Seitenkanten (45, 45') der Instrumententafelhalterung (22) verlaufen.

13. Straßenbaumaschine nach Anspruch 12,
wobei die Instrumententafel (5) in einer Richtung verstellbar ist, die parallel zur Längsachse der Instrumententafelhalterung (22) verläuft, insbesondere parallel zu den seitlichen äußeren Seitenkanten (45, 45').

14. Straßenbaumaschine nach einem der vorhergehenden Ansprüche,
wobei die Instrumententafel (5) eine Vielzahl von Steuermitteln (46) zum Steuern des Betriebs der Straßenbaumaschine sowie Anzeigemittel (47) zum Anzeigen interner Zustände der Straßenbaumaschine, insbesondere von Maschinenstatusanzeigen oder Betriebszuständen der Straßenbaumaschine, umfasst.

15. Straßenbaumaschine nach einem der vorhergehenden Ansprüche,
wobei der Fahrstand (1) ferner mindestens einen Fahrersitz (3, 3') umfasst, der seitlich auf dem Fahrstand (1) bewegbar ist.

16. Straßenbaumaschine nach einem der vorhergehenden Ansprüche,
wobei die Baumaschine als Straßenfertiger, Bodenverdichter oder Gummiradwalze konfiguriert ist.

## Revendications

1. Engin pour travaux routiers, en particulier finisseur à asphalte (48) ou véhicule de transfert de matériaux (VTM), comprenant :
une plateforme opérateur (1) comprenant un tableau de bord, le tableau de bord (5) étant fixé à un support (22) de tableau de bord qui est mobile horizontalement entre une première position terminale latérale et une seconde position terminale latérale sur un sys-tème (6) de guidage par rails,
dans lequel le système (6) de guidage par rails comprend
- un premier rail de guidage supérieur (7) ayant une section transversale circulaire,
- un second rail de guidage inférieur (8) ayant une section transversale rectangulaire, et
- au moins trois paliers (13, 15, 17),
dans lequel un premier palier (13) est conformé en palier lisse avec un manchon coulis-sant (14) qui est guidé sur le premier rail de guidage supérieur (7),
dans lequel un deuxième palier (15) est conformé en palier à billes avec un premier rou-leau (16) courant sur une surface extérieure (10) orientée verticalement du second rail de guidage inférieur (8), et
dans lequel un troisième palier (17) est conformé en palier à billes avec au moins un se-cond rouleau (18) courant sur une surface extérieure (11) orientée horizontalement du se-cond rail de guidage inférieur (8).

2. Engin pour travaux routiers selon la revendication 1,
dans lequel le deuxième palier (15) a un axe de rotation horizontal (19).

3. Engin pour travaux routiers selon la revendication 1 ou la revendication 2,
dans lequel le troisième palier (17) a un axe de rotation vertical (20).

4. Engin pour travaux routiers selon l'une quelconque des revendications 1 à 3,
dans lequel le troisième palier (17) comprend deux seconds rouleaux (18).

5. Engin pour travaux routiers selon l'une quelconque des revendications précédentes,
dans lequel le deuxième palier (15) et le troisième palier (17), comprennent chacun une partie fixe (21, 24) qui est fixée au support (22) du tableau de bord par des premiers moyens de fixation (25, 26) et qui est fixe par rapport au support (22) du tableau de bord, et une partie rotative ou roulante (23, 27) qui est mobile par rapport au support (22) du ta-bleau de bord.

6. Engin pour travaux routiers selon l'une quelconque des revendications précédentes,
dans lequel le support (22) de tableau de bord présente une première portion (28), une deuxième portion (29) et une troisième portion (30) qui sont formées d'un seul tenant.

7. Engin pour travaux routiers selon la revendication 6,
dans lequel la première portion (28) présente une surface recto (32) et une surface verso (33), le tableau de bord (5) étant en particulier assujetti à la surface recto (32) par des se-conds moyens de fixation.

8. Engin pour travaux routiers selon la revendication 7,
dans lequel la deuxième portion (29) présente une surface recto (34) et une surface ver-so (35), la surface recto (34) de la deuxième portion (29) faisant face à la surface verso (33) de la première portion (28), et dans lequel le premier rail de guidage supérieur (7) avec le premier palier (13) est supporté sur la surface verso (35) de la deuxième portion (29).

9. Engin pour travaux routiers selon l'une quelconque des revendications 6 à 8,
dans lequel la troisième portion (30) présente une surface supérieure (36) et une surface inférieure (37), dans lequel le second rail de guidage inférieur (8), avec le deuxième palier (15) et le troisième palier (17), est supporté sur la surface supérieure (36) de la troisième portion (30).

10. Engin pour travaux routiers selon l'une quelconque des revendications 6 à 9,
dans lequel la première portion (28) et la deuxième portion (29) du support (22) du ta-bleau de bord sont disposées l'une par rapport à l'autre de telle sorte qu'un angle inférieur à 90° soit formé.

11. Engin pour travaux routiers selon l'une quelconque des revendications 6 à 10,
dans lequel la deuxième portion (29) est disposée selon une orientation sensiblement verticale, et la troisième portion (30) est disposée selon une orientation sensiblement hori-zontale de telle sorte que la deuxième portion (29) et la troisième portion (30) soient dispo-sées de manière sensiblement perpendiculaire l'une par rapport à l'autre.

12. Engin pour travaux routiers selon l'une quelconque des revendications précédentes,
dans lequel le support (22) du tableau de bord est doté d'une pluralité d'orifices (44, 44') pour fixer le tableau de bord (5) de manière ajustable au support (22) du tableau de bord, les orifices (44, 44') étant oblongs avec leur axe longitudinal respectif courant de ma-nière sensiblement parallèle aux bords (45, 45') des côtés latéraux extérieurs du support (22) du tableau de bord.

13. Engin pour travaux routiers selon la revendication 12,
dans lequel le tableau de bord (5) est réglable dans une direction parallèle à l'axe longi-tudinal de support (22) du tableau de bord, en particulier parallèle aux bords (45, 45') des côtés latéraux extérieurs.

14. Engin pour travaux routiers selon l'une quelconque des revendications précédentes,
dans lequel le tableau de bord (5) comprend une pluralité de moyens de commande (46) pour commander le fonctionnement de l'engin pour travaux routiers, et des moyens d'affichage (47) pour afficher les états internes de l'engin pour travaux routiers, en particu-lier des indications sur le statut de l'engin ou des états de fonctionnement de l'engin pour travaux routiers.

15. Engin pour travaux routiers selon l'une quelconque des revendications précédentes,
dans lequel la plateforme opérateur (1) comprend en outre au moins un siège (3, 3') pour l'opérateur qui est mobile latéralement sur la plateforme opérateur (1).

16. Engin pour travaux routiers selon l'une quelconque des revendications précédentes,
dans lequel l'engin pour travaux routiers est configuré en finisseur routier, en compac-teur de sol ou en rouleau sur pneumatiques.
